# EUROPEAN PATENT APPLICATION

(11) **EP 3 852 022 A1**
(43) Date of publication of application: **21.07.2021**
(21) Application number: 19858763.6
(22) Date of filing: 07.09.2019
(51) Int. Cl.: G06N 20/00

(54) **AI CREATION VERIFICATION DEVICE**

(30) Priority: 15.09.2018 JP 2018173142
(71) Applicant: Broadleaf Co., Ltd., Tokyo 140-0002 (JP)
(72) Inventor: OYAMA Kenji, Tokyo 140-0002 (JP)
(74) Representative: Grünecker Patent- und Rechtsanwälte PartG mbB
(86) International application number: PCT/JP2019/035288
(87) International publication number: WO 2020/054636

(57) **Abstract**

Provided is an AI creation verification device capable of verifying whether a creation created by means of artificial intelligence actually has been created by artificial intelligence. This AI creation verification device comprises: an AI information acquisition unit that acquires, from an artificial intelligence device, learning data and program information constituting artificial intelligence; an input information acquisition unit that acquires and saves input information for the artificial intelligence device; a computation unit for using the information acquired by the AI information acquisition unit and the input information acquisition unit to carry out information processing; and a computation result storage unit for storing a creation that has been output as a computation result from the computation unit.

## Description

### TECHNICAL FIELD

The present invention relates to a device for verifying a fact of having been generated with respect to creations generated by computers, and more particularly, to a device for verifying a fact of having been generated with respect to creations, such as literature, science, art, music, inventions, devices, and designs, which are generated by artificial intelligence.

### BACKGROUND ART

Inventions, devices, designs, and the like are results of creative activities of natural persons, and works of literature, science, art, music, and the like are creative expressions of thoughts or feelings of the creators. Therefore, such works are originally created by creative activities of natural persons.

However, since it is difficult for people having no knowledge at all to do creative activities, in many cases, people model on results (such as background art) achieved by creative activities in the past or creations generated by other artists. However, due to time or financial constraints, it is not easy to do such creative activities.

For this reason, Patent Literature 1 (Japanese Patent Application Laid-Open No. 2018-55605) proposes a creation assistance program capable of assisting in generating creations by effectively presenting creative contents to creators. In other words, this literature proposes a creation assistance program for making a computer execute a mining step of extracting information according to a creation desired to be newly generated and a searching step of searching for one or more creative concepts based on three or more levels of relevance between a reference character string based on the information extracted in the mining step and creative contents classified into two or more categories, with reference to three or more levels of relevance between individual reference character strings acquired in advance and the creative concepts.

Also, Non-Patent Literature 1 (Ueno Tatsuhiro, "Invention" and "Creation" by Artificial Intelligence) discloses a fact that artificial intelligence sometimes produces creations, and recently, automatic composition systems such as "Orpheus" by Shigeki Sagayama (who is a professor at Meiji University now) and others and "lamus" by Malaga University have appeared, artificial intelligence which learned Rembrandt's art works produced a work after Rembrandt, and artificial intelligence generated a short story.

As related artificial intelligence techniques, there are techniques using an expert system or a neural network. Of them, the expert system is a program composed of a rule groups for analyzing information on problems in a specific field, and consists of an inference engine which is not variable and a knowledge database which is variable. And the inference engine executes inference using the rule groups, so history of the processing is relatively explicit.

On the other hand, in the neural network, in general, artificial neurons in an input layer, an intermediate layer, and an output layer are connected in series, and connections between the artificial neurons are established by executing synapse training. As synapse training, backpropagation is generally used. And, it has been pointed out that the neural network has disadvantages such as a disadvantage that history of processing is a black box, so it is difficult to confirm the validity of the processing.

Further, in Patent Literature 2, to provide an artificial intelligence techniques in which details of processing are not a black box, a solution in which input information is subjected to sentence structure analysis, and is arranged into subjects, modifiers of the subjects, predicates, modifiers of the predicates, numeric values, and symbols so as to have a readily retrievable structure, and is recorded, and the input information is compared with already recorded information, and is analyzed to extract useful information to construct a knowledge system, and if artificial intelligence cannot assess its usefulness, a human passes judgment, and when a question and the like are generated by the human, the artificial intelligence searches the constructed knowledge system for a procedure and information needed for answering the question, and generates an answer in accordance with the searched procedure is proposed.

### CITATION LIST

### PATENT LITERATURE

Patent Literature 1: Japanese Patent Application Laid-Open No. 2018-55605
Patent Literature 2: Japanese Patent Application Laid-Open No. 2017-130171

### NON-PATENT LITERATURE

Non-Patent Literature 1: Ueno Tatsuhiro, "Invention" and "Creation" by Artificial Intelligence, Japio YEAR BOOK 2017, 2017, p21-23

### SUMMARY OF INVENTION

### TECHNICAL PROBLEM

Deep learning attracting attention due to the development of artificial intelligence is a scheme in which artificial intelligence decides setting and combinations of features, using a multi-layered algorithm "Deep Neural Network" modeled on the neural circuit of the human brain, by itself. By this deep learning, automatic learning and result output is automatically executed without any instructions from the user, so details of arithmetic processing does not become clear. This is the current circumstances. In this regard, in Patent Literature 2, the artificial intelligence technique in which details of the processing are not a black box is proposed, so a procedure and information needed for answering a question becomes clear; however, it is impossible to clarify whether the answer was actually produced by artificial intelligence.

For this reason, an object of the present invention is to provide an AI creation verification device capable of verifying whether a creation generated by artificial intelligence was actually generated by the artificial intelligence.

### SOLUTION TO PROBLEM

In order to achieve the above-mentioned object, the present invention provides an AI creation verification device capable of verifying whether a creation generated by an artificial intelligence device was generated by the artificial intelligence device, and preferably, authenticating that fact.

In other words, in order to achieve the above-mentioned object, the present invention provides an AI creation verification device including an input information processing unit configured to acquire input information of an artificial intelligence device, hold the input information, and output the input information to the artificial intelligence device, and a creation information processing unit configured to acquire creation information outputted from the artificial intelligence device, and hold the creation information in association with the input information acquired by the input information processing unit.

Also, in order to achieve the above-mentioned object, the present invention provides an AI creation verification device including of an AI information acquisition unit configured to acquire program information constituting artificial intelligence and training data information from an artificial intelligence device, an input information acquisition unit configured to acquire input information of an artificial intelligence device and hold the input information, an arithmetic unit configured to execute information processing using the information acquired by the AI information acquisition unit and the input information acquisition unit, and an arithmetic result storage unit in which a creation outputted as an arithmetic result of the arithmetic unit is stored.

Also, in order to achieve the above-mentioned object, the present invention provides an AI creation verification device including an AI information acquisition unit configured to acquire execution environment information of an artificial intelligence device constructed as a trained model, an input information acquisition unit configured to acquire input information of an artificial intelligence device and hold the input information, an arithmetic unit configured to execute information processing using the information acquired by the AI information acquisition unit and the input information acquisition unit, and an arithmetic result storage unit in which a creation outputted as an arithmetic result of the arithmetic unit is stored.

In the AI creation verification device according to the present invention, the execution environment information may include information on features extracted from training data and network structure information representing connections between the features.

Also, in the AI creation verification device according to the present invention, the AI information acquisition unit may acquire the program information and the training data information in an image file format, a binary file format, or a source file format.

Also, in the AI creation verification device according to the present invention, the AI information acquisition unit may hold a date and time of acquisition of the program information and the training data information.

Also, in the AI creation verification device according to the present invention may include an AI information discarding unit configured to discard the program information and the training data information which are acquired by the AI information acquisition unit after the creation is stored in the arithmetic result storage unit.

Also, the AI creation verification device according to the present invention may further include a hash value transmission unit configured to generate a hash value of at least one of data acquired by the AI information acquisition unit and data on the creation to be outputted as an arithmetic result of the arithmetic unit, and transmits to a time-stamping authority for issuing time stamps.

Also, the AI creation verification device of the present invention can change the content or type of authentication according to the content, data format (one of the image file format, the binary file format, and the source file format), and so on of information which is acquired from the artificial intelligence device. For example, the AI creation verification device may be configured to give a higher level of authentication in a case where the information acquired from an artificial intelligence device is a source file and it is possible to verify a program algorithm.

### ADVANTAGEOUS EFFECTS OF INVENTION

The AI creation verification device of the present invention can acquire, without changing, a program and training data for constructing an artificial intelligence device which is a trained model, or execution environment of the artificial intelligence device which is a trained model, and perform the same processing as processing of the artificial intelligence device on the basis of the acquired information. Therefore, it is possible to verify whether an creation generated by the artificial intelligence device was actually generated by the corresponding artificial intelligence device.

Therefore, in the case where corresponding creations are inventions, devices, designs, and works, it is possible to clarify ownership relations of these creations.

Also, the AI creation verification device according to the present invention can perform information processing in the same environment as that of an artificial intelligence device which generates a creation, so it is possible to check and verify the existence/non-existence and extent of human judgment on generation of the creation. Therefore, it is also possible to verify the existence/non-existence and extent of involvement of human creative activities in generation of an inventions, a device, a design, or a work by an artificial intelligence device, and hold this.

### BRIEF DESCRIPTION OF DRAWINGS

[Fig. 1] Fig. 1 is a block diagram illustrating an AI creation verification device according to a first embodiment.
[Fig. 2] Fig. 2 is a conceptual view illustrating machine learning for constructing a trained model.
[Fig. 3] Fig. 3 is a block diagram illustrating an AI creation verification device according to a second embodiment.
[Fig. 4] Fig. 4 is a sequence diagram illustrating processing of the AI creation verification devices according to the first and second embodiments.
[Fig. 5] Fig. 5 is a block diagram illustrating processing of an AI creation verification device according to a third embodiment.
[Fig. 6] Fig. 6 is a sequence diagram illustrating processing of the AI creation verification device according to the third embodiment.
[Fig. 7] Fig. 7 is a block diagram illustrating processing of an AI creation verification device according to a fourth embodiment.
[Fig. 8] Fig. 8 a sequence diagram illustrating processing of the AI creation verification device according to the fourth embodiment.
[Fig. 9] Fig. 9 is a configuration diagram of computer hardware constituting an AI creation verification device 500.

### DESCRIPTION OF EMBODIMENTS

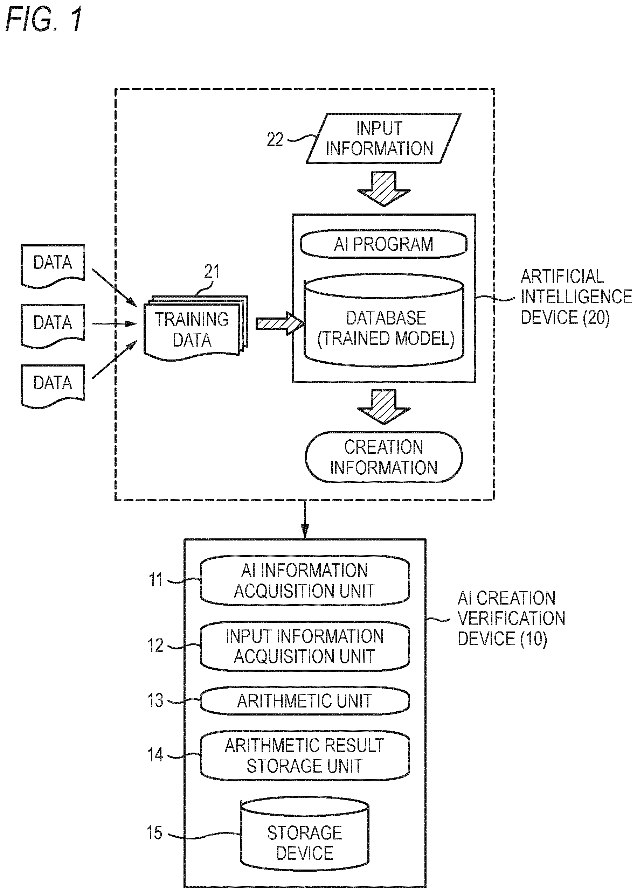

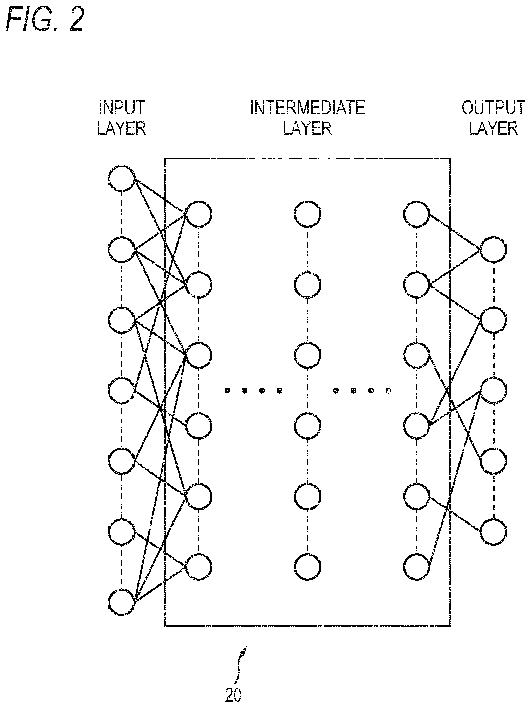

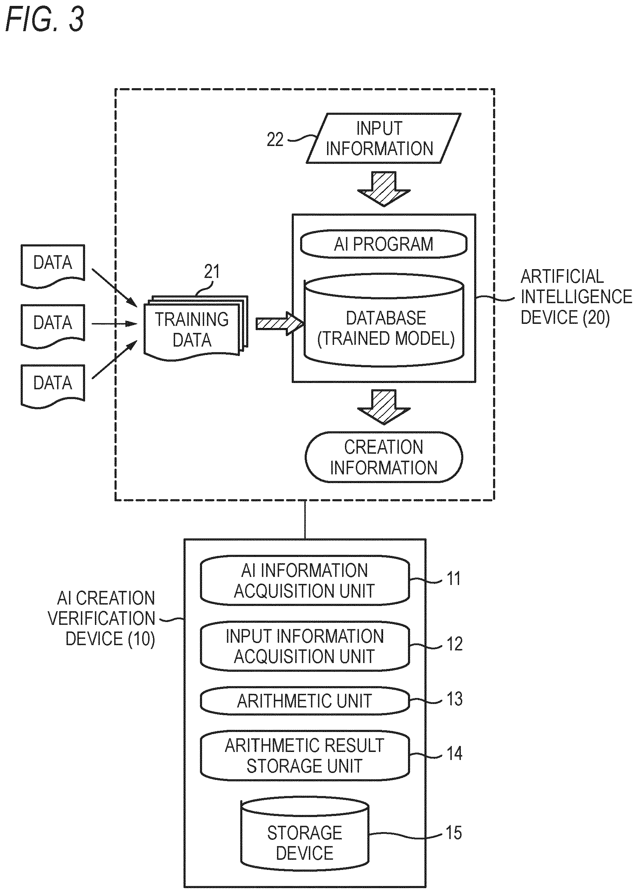

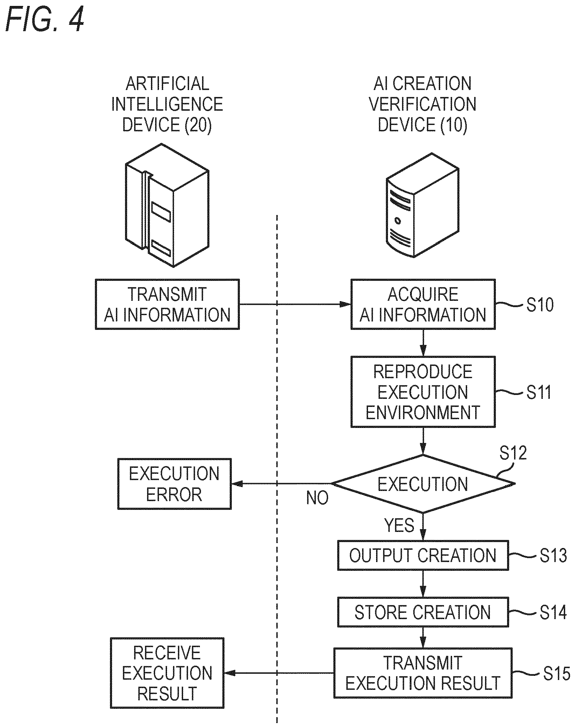

Hereinafter, devices for verifying AI creations (i.e. creations by artificial intelligence) according to embodiments will be described in detail with reference to the drawings. Fig. 1 is a block diagram illustrating an AI creation verification device 10 according to a first embodiment, and Fig. 2 is a conceptual view illustrating machine learning for constructing a trained model, and Fig. 3 is a block diagram illustrating an AI creation verification device 10 according to a second embodiment, and Fig. 4 is a sequence diagram illustrating processing of the AI creation verification devices 10 according to the first and second embodiments.

First, the AI creation verification device 10 of the first embodiment shown in Fig. 1 is constructed to acquire training data 21 used in an artificial intelligence device 20 to construct a trained model and the whole system of the corresponding artificial intelligence devices 20 and verify details of the processing thereof.

In other words, the artificial intelligence device 20 collects data published on a communication network such as the Internet and unpublished data premise-based or requiring authentication, as training data 21, and executes machine learning (particularly, deep learning) on the basis of the training data 21. In this machine learning, as shown in Fig. 2, the training data 21 is used as an input layer, and from the data in the input layer, their features are derived by a computer algorithm, and in an intermediate layer, a network structure representing the connections between the features is constructed, and output information to be an output layer finally is constructed.

The AI creation verification device 10 of the first embodiment shown in Fig. 1 is configured to acquire information on features extracted from the training data 21, and information including the network structure information representing the connections between the features, as execution environment information, and reproduce this in a storage device 15, thereby reproducing the same system as that of the artificial intelligence device 20 in the AI creation verification device 10.

In particular, in the AI creation verification device 10 according to this embodiment, an AI information acquisition unit 11 is configured to acquire program information constituting artificial intelligence and information on the training data 21 (hereinafter, referred to as "AI information") from the artificial intelligence device 20 to be verified. As a result, even in the AI creation verification device 10, it is possible to execute machine learning (deep learning), and it also is possible to construct an artificial intelligence device 20 as a trained model. In other words, the AI creation verification device 10 capable of construction and verification of a trained model is implemented.

Meanwhile, in an AI creation verification device 10 of a second embodiment shown in Fig. 3, an AI information acquisition unit 11 acquires the execution environment information of the artificial intelligence device 20 (including the information on features extracted from the training data 21 and the network structure information representing the connections between the features) in at least one format of an image file format, a binary file format, and a source file format. In other words, it acquires system data so as to be able to copy the whole system of the artificial intelligence device 20 in the storage device 15 or the like as it is. Therefore, it is possible to reproduce the same system as that of the artificial intelligence device 20 in the corresponding AI creation verification device 10.

Subsequently, an input information acquisition unit 12 acquires the same information as input information 22 inputted to the artificial intelligence device 20, and inputs it to the AI creation verification device 10.

As a result, in an arithmetic unit 13 of the AI creation verification device 10, it is possible to execute the same information processing as that of the artificial intelligence device 20, whereby it is possible to acquire the same result as that of the artificial intelligence device 20. Then, the arithmetic result is stored in an arithmetic result storage unit 14 such that it is possible to confirm details of the processing and AI creation of the artificial intelligence device 20 later.

In particular, in the case where the output result is a creation, i.e. an invention, a device, a design, or a work, the AI creation verification device 10 according to the present embodiment can verify the procedure of establishment of the creation information which is the output result. Therefore, for example, in processing of the corresponding AI creation verification device 10, it is possible to verify whether the human thought of an operator or the like has been involved, the extent of involvement, etc. As a result, it also is possible to verify the validity of intellectual property rights to the invention, the device, the design, or the work, the establishment procedure thereof, etc.

Fig. 4 is a sequence diagram illustrating processing of the AI creation verification device 10 and the artificial intelligence device 20 according to the first and second embodiments. As shown in the drawing, at the start of processing, in an AI information acquisition step S10, the AI creation verification device acquires the execution environment information of the artificial intelligence device 20, or the information (AI information) for reproducing the system of the artificial intelligence device 20, such as the program information constituting the artificial intelligence and the information on the training data 21 (learned data), in at least one format of the image file format, the binary file format, and the source file format.

Next, in an execution environment reproduction step S11, the AI creation verification device 10 having acquired the AI information reproduces the same execution environment as that of the artificial intelligence device 20. Subsequently, in an execution step S12, the AI creation verification device executes processing in the execution environment. If execution is not possible, the AI creation verification device regards it as an execution error, and transmits error information to the artificial intelligence device 20. Meanwhile, if execution succeeds without any problem, in a creation output step S13, the AI creation verification device outputs a creation as the result of the execution, and stores the outputted creation in the storage device in a creation storage step S14. Subsequently, in an execution result transmission step S15, the AI creation verification device transmits the creation generated as the result of the execution of the AI creation verification device 10 to the artificial intelligence device 20.

By the above-described processing, the AI creation verification device 10 can reproduce output of the creation from the input information of the artificial intelligence device 20, so it is possible to verify whether the corresponding creation was generated by the artificial intelligence device 20.

By the way, the AI creation verification device 10 may be configured such that in some cases, such as the case where the artificial intelligence device 20 has an objection with respect to the creation generated as the result of the execution of the AI creation verification device 10, i.e. the case where the generated result is not the same as the creation or deviated from a certain standard as a result of comparison, the AI creation verification device receives it, and executes processing again.

Also, for a user who does not want the program and learned data of the artificial intelligence device 20 to be stored in the AI creation verification device 10, an AI information discarding unit for discarding the acquired information may be provided. This AI information discarding unit may be configured to discard the information acquired by the AI information acquisition unit 11 after the arithmetic result storage unit 14 stores the creation, and may notify the discard fact, for example, by transmitting the image file format, the binary file format, and the source file format of the system of the verification device after the discard to the artificial intelligence device 20.

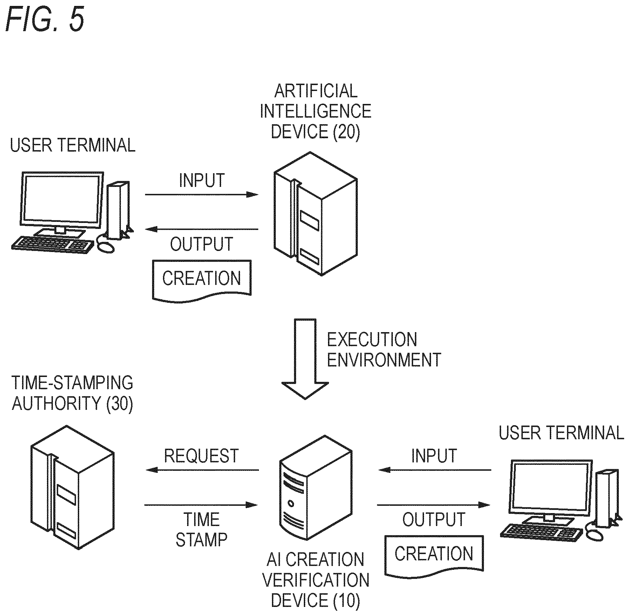

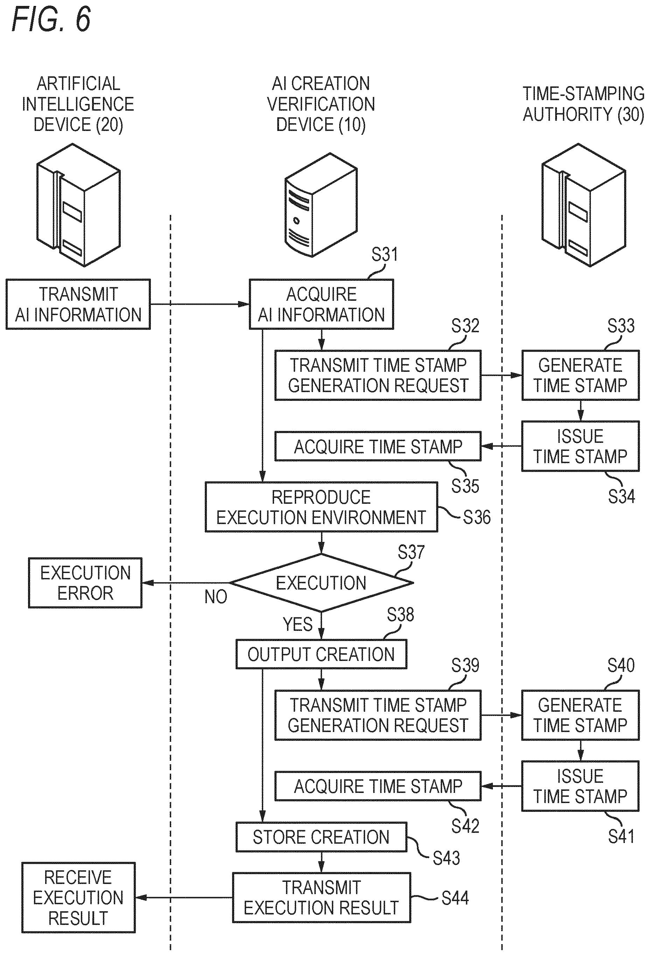

An AI creation verification device 10 of a third embodiment shown in Fig. 5 is configured to improve the objectivity or legitimacy of the verification by using the AI creation verification device 10 shown in the first and second embodiments and further using time stamps. Fig. 6 is a sequence diagram of the AI creation verification device 10 according to the third embodiment.

In other words, the AI creation verification device 10 shown in this embodiment acquires AI information from the artificial intelligence device 20 in an AI information acquisition unit 31, and then executes processing for acquiring a time stamp with respect to the corresponding AI information. Specifically, in a time stamp generation request step S32, the AI creation verification device 10 calculates a hash value with respect to the acquired AI information, and transmits it to a time-stamping authority 30 (TSA, i.e. a time-stamping authority for issuing time stamps) by a hash value transmission unit. In a time stamp generation step S33, the time-stamping authority 30 generates a time stamp by adding time information to the hash value, and transmits it to the AI creation verification device 10 (a time stamp issuance step S34). Then, in a time stamp acquisition step S35, the AI creation verification device 10 acquires the time stamp information from the time-stamping authority 30, and holds it.

Subsequently, the AI creation verification device 10 reproduces the execution environment of the artificial intelligence device 20 on the basis of the AI information acquired from the artificial intelligence device, similarly to the above-described embodiments, in an execution environment reproduction step S36, and executes it, thereby generating a creation (an execution step S37), and outputs the creation which is the result of the execution (a creation output step S38).

In response to the output of the creation, the AI creation verification device 10 acquires a time stamp with respect to the data on the creation (the output creation), in the same way as that for the AI information. In other words, in a time stamp generation request step S39, the AI creation verification device generates a hash value with respect to the information (data) on the creation, and transmits it to the time-stamping authority 30. Then, the time-stamping authority 30 executes a time stamp generation step S40, thereby giving a time stamp to that information, and issues the time stamp to the AI creation verification device 10 in a time stamp issuance step S41. The AI creation verification device 10 acquires the time stamp from the time-stamping authority 30, and stores it (a time stamp acquisition step S42). By acquiring the time stamp with respect to the creation in the above-mentioned way, it is possible to verify that the corresponding creation is generated at that time, and it is possible to supplement the fact that the creation was generated by the AI creation verification device 10.

Subsequently, similarly in the above-described embodiments, with respect to the work generated as the result of the execution step S37 (i.e. the output work), the AI creation verification device can store it in the storage device of the AI creation verification device 10 in a creation storage step S43, and then transmit it to the artificial intelligence device 20 in an execution result transmission step S44.

As a result of the above-described processing, the AI creation verification device 10 can reproduce the output of the creation from the input information of the artificial intelligence device 20, so it is possible to verify whether the creation was generated by the artificial intelligence device 20. In particular, in the present invention, the AI creation verification device acquires the time stamps with respect to the AI information and the creation, respectively, so it is possible to verify the fact that each piece of information exists.

In addition, the above-mentioned AI creation verification device 10 may be configured such that in the case where the artificial intelligence device 20 has an objection with respect to the creation generated as the result of the execution of the AI creation verification device 10, the AI creation verification device receives it, and executes processing again.

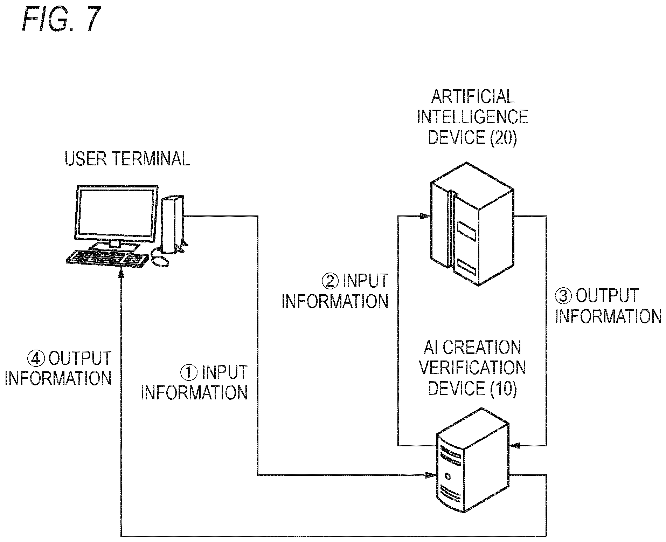

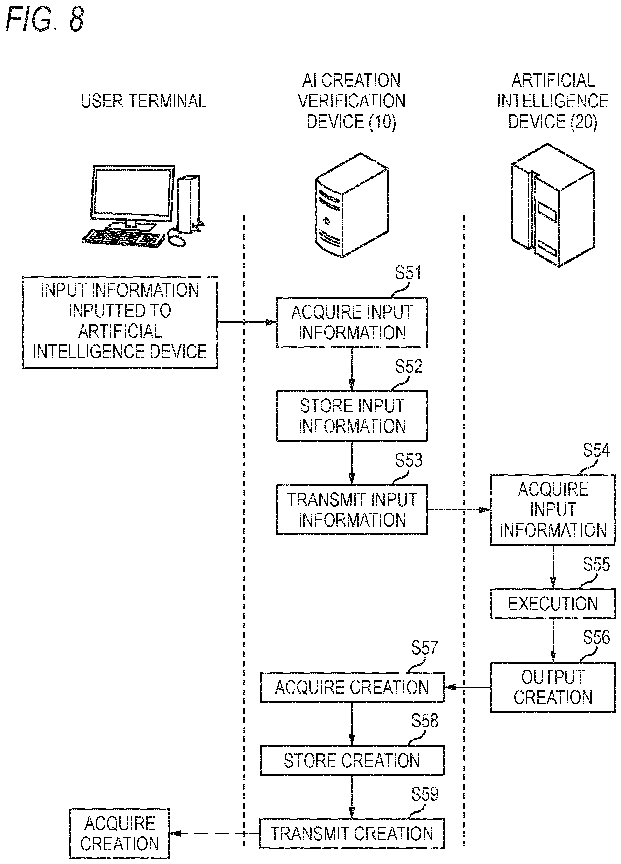

Fig. 7 is a block diagram illustrating processing of an AI creation verification device 10 according to a fourth embodiment, and Fig. 8 is a sequence diagram illustrating the processing of the AI creation verification device 10 according to the fourth embodiment.

The AI creation verification device 10 shown in the fourth embodiment is configured to immediately relay input of information to the artificial intelligence device 20 and output of a result (creation) from the artificial intelligence device 20, thereby authenticating that the corresponding result (creation) was generated by the artificial intelligence device 20.

Specifically, an input information processing unit of the AI creation verification device 10 acquires input information which is input from a user terminal to the artificial intelligence device 20 in an input information acquisition step S51, and stores the acquired input information in a storage unit or the like of the AI creation verification device in an input information storage step S52. Then, the AI creation verification device 10 transmits it to the artificial intelligence device 20 (an input information transmission step S53), and the artificial intelligence device 20 acquires that (an input information acquisition step S54), and starts processing in an execution step S55. The artificial intelligence device 20 transmits a creation output as a result of the processing of the artificial intelligence device, to the AI creation verification device, in a creation output step S56, and a creation information processing unit of the AI creation verification device 10 acquires that (a creation acquisition step S57), and stores that in association with the input information acquired by the input information processing unit (a creation storage step S58). Further, the creation information may be transmitted to the user terminal in a creation transmission step S59.

The AI creation verification device 10 configured as described above also may be configured such that in the case where the artificial intelligence device 20 has an objection with respect to the creation transmitted by the AI creation verification device 10, the AI creation verification device 10 receives it and transmits the input information to the artificial intelligence device 20 again and acquires a result of processing of the artificial intelligence device 20. In this case, as the input information to be transmitted to the artificial intelligence device 20, besides the information received from the user terminal first, input information different from that may be acquired from the user terminal, or be selected in the AI creation verification device 10. Also, the AI creation verification device may be configured to acquire the time stamps for the input information received from the user terminal and the processing result received from the artificial intelligence device 20, respectively.

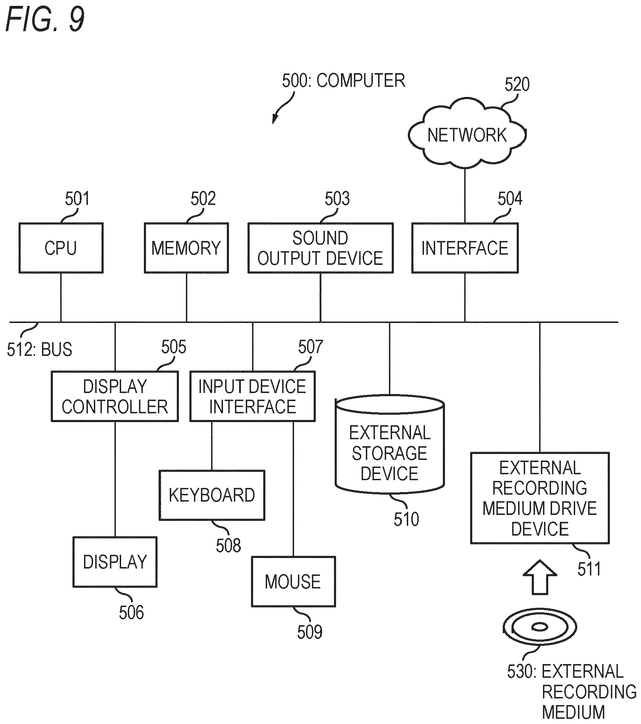

Fig. 9 is a configuration diagram of computer hardware constituting the above-mentioned AI creation verification device 500. However, the computer (the AI creation verification device 10) 500 of Fig. 9 just shows a representative configuration example, and may be configured as a dedicated device as long as it has an arithmetic device, a memory, and a program for executing the above-described processing.

The computer 500 shown in Fig. 9 has a configuration including a CPU 501, a memory 502, a sound output device 503, a network interface 504, a display controller 505, a display 506, an input device interface 507, a keyboard 508, a mouse 509, an external storage device 510, an external recording medium drive device 511, and a bus 512 connecting these components.

The CPU 501 controls the operations of the individual components of the computer 500, and controls acquisition or transmission of each piece of information, execution of an AI program, etc. described above under the control of an OS, thereby controlling the operations. The memory 502 generally includes a ROM (Read Only Memory) which is a non-volatile memory and a RAM (Random Access Memory) which is a volatile memory. In the ROM, programs to be executed when the computer 500 is booted up, and so on are stored. In the RAM, application programs for executing processing of the individual devices which are executed by the CPU 501, a database program, and data which the programs use when running (for example, data and scripts read from a database or a front wheel system) are temporarily stored.

The sound output device 503 is a device for outputting sound, such as a speaker, and the communication interface 504 is an interface for accessing to a network 520 to exchange information with various devices. The display controller 505 is a dedicated controller for actually processing drawing commands which the CPU 501 issues. Drawing data processed by the display controller 505 is written in a graphic memory, first, and then is output to the display 506 which is a display unit.

The input device interface 507 receives a signal input from input/output devices such as the keyboard 508, the mouse 509, and a touch pad, and provides a predetermined command to the CPU 501 according to the signal pattern. The keyboard 508 and the mouse 509 are required for performing operations such as program execution and settings.

The external storage device 510 also is included in the category of storage means in this specification. The above-mentioned programs and data are recorded in the external storage device 510, and are loaded from the external storage device into the RAM of the memory 502 if necessary at the time of execution. Further, the external recording medium drive device 511 is a device for accessing the recording surface of a portable external recording medium 530 such as a CD (Compact Disc), an MO (Magnet-Optical Disc), a DVD (Digital Versatile Disc), etc. and reading the data recorded thereon.

However, the AI creation verification device 10 according to the present embodiment may have an arbitrary configuration as long as it can reproduce the system of the artificial intelligence device 20 and execute it.

### INDUSTRIAL APPLICABILITY

The AI creation verification device of the present invention can be used as a device for authenticating the result of processing of the artificial intelligence device. In particularly, in the case where the creation is an invention, a device, a design, or a work, the AI creation verification device can be used as a device for objectively authenticating emergence of rights and ownership of rights with respect to the creation.

### REFERENCE SIGNS LIST

- 10:: Verification Device
- 11:: AI Information Acquisition Unit
- 12:: Input Information Acquisition Unit
- 13:: Arithmetic Unit
- 14:: Arithmetic Result Storage Unit
- 15:: Storage Device
- 20:: Artificial Intelligence Device
- 21:: Training Data
- 22:: Input Information
- 30:: Time-Stamping Authority
- 500:: Verification Device (Computer)
- 501:: CPU
- 502:: Memory
- 504:: Communication Interface (Network Interface)
- 506:: Display
- 507:: Input Device Interface
- 508:: Keyboard
- 509:: Mouse
- 510:: External Storage Device

## Claims

1. An AI creation verification device comprising:
an input information processing unit configured to acquire input information of an artificial intelligence device, hold the input information, and output the input information to the artificial intelligence device; and
a creation information processing unit configured to acquire creation information outputted from the artificial intelligence device, and hold the creation information in association with the input information acquired by the input information processing unit.

2. An AI creation verification device comprising:
an AI information acquisition unit configured to acquire program information constituting artificial intelligence and training data information from an artificial intelligence device;
an input information acquisition unit configured to acquire input information of an artificial intelligence device and hold the input information;
an arithmetic unit configured to execute information processing using the information acquired by the AI information acquisition unit and the input information acquisition unit; and
an arithmetic result storage unit in which a creation outputted as an arithmetic result of the arithmetic unit is stored.

3. An AI creation verification device comprising:
an AI information acquisition unit configured to acquire execution environment information of an artificial intelligence device constructed as a trained model;
an input information acquisition unit configured to acquire input information of an artificial intelligence device and hold the input information;
an arithmetic unit configured to execute information processing using the information acquired by the AI information acquisition unit and the input information acquisition unit; and
an arithmetic result storage unit in which a creation outputted as an arithmetic result of the arithmetic unit is stored.

4. The AI creation verification device according to claim 3, wherein
the execution environment information includes information on features extracted from training data and network structure information representing connections between the features.

5. The AI creation verification device according to any one of claims 2 to 4, wherein
the AI information acquisition unit configured to acquire the program information and the training data information in at least one of an image file format, a binary file format, and a source file format.

6. The AI creation verification device according to any one of claims 2 to 5, wherein
the AI information acquisition unit configured to hold a date and time of acquisition of the program information and the training data information.

7. The AI creation verification device according to any one of claims 2 to 6, further comprising
an AI information discarding unit configured to discard the program information and the training data information which are acquired by the AI information acquisition unit after the creation is stored in the arithmetic result storage unit.

8. The AI creation verification device according to any one of claims 2 to 7, further comprising
a hash value transmission unit configured to generate a hash value of at least one of data acquired by the AI information acquisition unit and data on the creation to be outputted as the arithmetic result of the arithmetic unit, and transmit to a time-stamping authority for issuing time stamps.
